# EUROPEAN PATENT APPLICATION

(11) **EP 3 702 197 A1**
(43) Date of publication of application: **02.09.2020**
(21) Application number: 20150543.5
(22) Date of filing: 07.01.2020
(51) Int. Cl.: B60L 1/00, B60L 50/61, B60W 10/04, B60W 10/08

(54) **CONTROL SYSTEM FOR HYBRID VEHICLE**

(30) Priority: 27.02.2019 JP 2019034840
(71) Applicant: TOYOTA JIDOSHA KABUSHIKI KAISHA, Toyota-shi, Aichi-ken, 471-8571 (JP)
(72) Inventor: BISAIJI, Yuki, TOYOTA-SHI, AICHI-KEN, 471-8571 (JP)
(74) Representative: Cabinet Beau de Loménie

(57) **Abstract**

The control system (100) comprises an engine (10), a MG (20), a high-voltage battery (30), a first load (40), a second load (50) and an ECU (60). When the ECU determines that a signal requesting for the driving of the second load has been detected, the ECU outputs to the engine a control signal for starting power generation by the MG. At the same time, the ECU outputs the control signal to the power supply control circuit connected to the second load such that the ECU disconnects the electric connection between the high-voltage battery and the second load. When the electric connection between the high-voltage battery and the second load is disconnected, the power supply is prohibited from the high-voltage battery to the second load during power generation by the MG.

## Description

### Technical Field

The present disclosure relates to a control system for hybrid vehicle.

### Background

JP2016-153276A disclose a control system of hybrid vehicle. The conventional system comprises an engine, a motor for power generation, a motor for driving, a battery and a heater. The motor for power generation generates electric power by driving the engine. The motor for driving uses power from the battery or the power from the motor for power generation to drive wheels. The battery stores the power from the motor for power generation or supplies the power to the motor for driving. The heaters raises temperature of the battery.

In the conventional systems, when the battery is cool, a difference between generated power by the motor for power generation and consumed power by the motor for driving is used to activate the heater. When the generated power exceeds the consumed power, surplus power is supplied to the heater. This energizes the heater to raise the temperature of the battery. On the other hand, when the generated power is lower than the consumed power, electric power is supplied from the battery to the heater. In other words, the conventional system permits power supply from the battery under a certain condition.

The applicant is aware of the following literatures, as literatures related to the present disclosure.
Patent Literature 1: JP2016-153276A
Patent Literature 2: JP2015-209161A
Patent Literature 3: JP2009-248888A

However, if the power supply from the battery is permitted, degradation of the battery due to the increased repetition rate cannot be avoided. In this respect, if the generated power is increased, it is possible to suppress an increase in repetition rate. However, when the motor for power generation is composed of a field winding type motor, the following problem arise. That is, a field delay occurs between start of the excitation current to the field winding in response to a signal requesting the driving of an electric apparatus such as the heater and completion of magnetization of a field pole. Therefore, even if the generated power is increased, the electric power is supplied from the battery to the electric apparatus during this field delay.

An object of the present disclosure is to suppress the increase in the repetition rate of the battery intended to drive the electric apparatus in a hybrid vehicle including the electric apparatus driven by the electric power from the battery or the field winding type motor for power generation.

### Summary

The first aspect is a control system for hybrid vehicle to solve the problem mentioned above and has the following features.

The control system comprises a motor for power generation, a battery, an electric apparatus and a controller.

The motor for power generation includes a field winding. The motor for power generation is configured to generate electric power by power of an engine.

The battery is configured to store the electric power generated by the motor for power generation.

The electric apparatus is driven by the electric power generated by the motor for power generation or the electric power from the battery.

The controller is configured to control power generation of the motor for power generation using the power of the engine, driving of the electric apparatus using the electric power generated by the motor for power generation, and charging of the battery using the electric power generated by the motor for power generation.

The controller is further configured to:
when a signal requesting for the driving of the electric apparatus is detected, drive the engine such that the motor for power generation generates power; and
interrupt electric connections between the battery and the electric apparatus.

The second aspect further has the following features in the first aspect.

The controller is further configured to:
when the signal requesting for the driving of the electric apparatus is detected, detect excitation current value flowing through the field winding; and
supply the electric power generated by the motor for power generation without supplying to the electric apparatus until the excitation current value reaches a target current value.

The third aspect further has the following features in the second aspect.

The controller is further configured to supply the electric power generated by the motor for power generation to the electric apparatus when the excitation current value reaches the target current value.

The target current value is a current value when the excitation current flowing through the field winding converges to a constant value.

The fourth aspect further has the following features in the first aspect.

The controller is further configured to:
when a signal requesting for the driving of the electric apparatus is detected, detect excitation current value flowing through the field winding;
supply the electric power generated by the motor for power generation to the electric apparatus when an absolute value of the excitation current value exceeds that of the target current value; and
set the target current value variably such that the absolute value of the target current value is below that of the excitation current value during the signal requesting for the driving of the electric apparatus is detected.

The fifth aspect further has the following features in any one of the first to fourth aspects.

The control system further comprises a first load.

The first load is driven by the electric power from the battery.

The electric apparatus is a second load in which priority driven by the electric power from the battery is lower than the first load.

According to the first aspect, when the signal requesting for the driving of the electric apparatus is detected, the electric connection between the battery and the electric apparatus is interrupted. Therefore, it is possible to avoid supplying the electric power from the battery to the electric apparatus during the field delay. Therefore, the repetition rate of the battery can be suppressed and life of the battery can be prolonged.

According to the second aspect, after the signal requesting for the driving of the electric apparatus is detected, and before the excitation current value reaches the target current value, the electric power generated by the motor for power generation is supplied to the battery rather than to the electric apparatus. Therefore, it is possible to avoid going to be wasted the electric power generated for driving the electric apparatus.

According to the third aspect, after the excitation current value reaches the target current value, the electric power generated by the motor for power generation is supplied to the electric apparatus. The target current value is the current value at which the excitation current flowing through the field winding converges to the constant value. Therefore, it is possible to simplify control of duration of the power supply as compared with a case where the power supply to the electric apparatus is started prior to the arrival at the target current value.

According to the fourth aspect, after the signal requesting for the driving of the electric apparatus is detected, when the absolute value of the excitation current value exceeds that of the target current value, the electric power generated by the motor for power generation is supplied to the electric apparatus. Therefore, it is possible to start the power supply from the motor for power generation to the electric apparatus without waiting for completion of magnetization of the field pole. Therefore, it is possible to supply the electric power to the electric apparatus generated for driving the apparatus with zero waste and to respond to the signal requesting for the driving of the electric apparatus quickly.

According to the fifth aspect, it is possible to avoid the electric power from being supplied to the second load from the battery when the signal requesting for the driving of the second load in which the priority driven by the electric power from the battery is lower than the first load is detected.

### Brief Description of Drawings

FIG. 1 is a diagram for showing a configuration example of a control system according to a first embodiment and a second embodiment of the present disclosure;
FIG. 2 is a block diagram for showing a configuration example of functions of an ECU 60;
FIG. 3 is a timing chart for explaining a field delay and problems associated therewith;
FIG. 4 is a time chart for explaining characteristic control according to the first embodiment;
FIG. 5 is a flow chart for explaining processing flow of the characteristic control according to the first embodiment;
FIG. 6 is a time chart for explaining the characteristic control according to the second embodiment; and
FIG. 7 is a flow chart for explaining processing flow of the characteristic control according to the second embodiment.

### Description of Embodiments

Embodiments of the present disclosure will be described below with reference to the drawings. Note that elements common to the respective drawings are denoted by the same reference numerals, and a repetitive description thereof is omitted. The present disclosure is not limited to the following embodiments.

### First embodiment

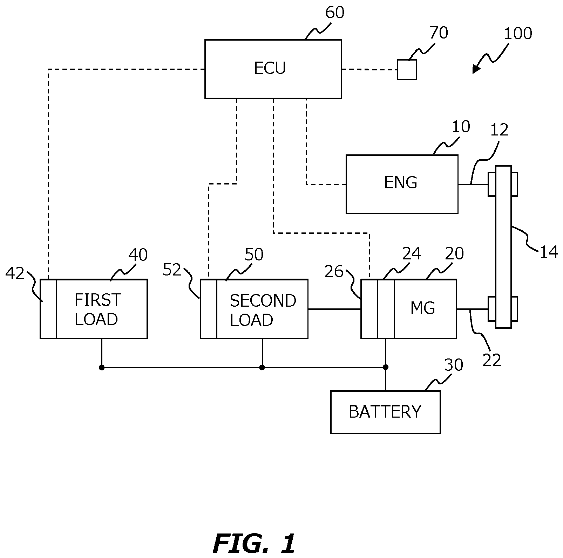

First, a first embodiment of the present disclosure will be described with reference to FIGS. 1 to 5.

### 1. Configuration of control system

### 1.1 Overall configuration

FIG. 1 is a diagram for showing a configuration example of a control system of a hybrid vehicle according to the first embodiment. A control system 100 shown in FIG. 1 comprises an engine 10, a MG (Motor Generator) 20, a high-voltage battery 30, a first load 40, a second load 50 and an ECU (Electric Control Unit) 60.

The engine 10 outputs power by converting thermal energy generated by burning fuel into kinetic energy of a moving body such as a piston. Examples of the engine 10 include a diesel engine and a gasoline engine. Examples of the fuel of the engine 10 include gasoline, light oil, and hydrogen fuel. When the hybrid vehicle is composed of a so-called series-type vehicle, the power of the engine 10 may be used only to generate the electric power at the MG 20. The engine 10 includes a crankshaft 12. The crankshaft 12 is connected to a rotating shaft 22 of the MG 20 via a transmission belt 14.

The MG 20 is a field winding type synchronous motor having both a function of power generation as regeneration and a function of driving motor as power running. The MG 20 includes, for example, X, Y, Z phase windings as a three-phase armature windings, and a field winding. The field winding is wound around a field pole disposed opposite to the inner periphery of the stator core to form a rotor. By flowing excitation current through the field winding, the field pole is magnetized. An alternating voltage is outputted from the respective phase winding by a rotating magnetic field generated when the field pole is magnetized.

An inverter 24 is connected to the MG 20. The inverter 24 converts DC power extracted from the high-voltage battery 30 into AC power and supplies it to the MG 20. The inverter 24 converts the AC power generated by the MG 20 into the DC power and supplies it to the high-voltage battery 30 or the second load 50.

A MG control circuit 26 is connected to the inverter 24. The MG control circuit 26 executes power regeneration control and power running control of the MG 20. During the execution of the power running control of the MG 20, the MG control circuit 26 provides the electric power of the high-voltage battery 30 to the MG 20 to drive the MG 20 as a motor. As a result, when the engine 10 is in operation, torques generated by the engine 10 are compensated. When the engine 10 is in stopping state, wheels are driven by the MG 20. During the execution of the power regeneration control of the MG 20, the MG control circuit 26 uses rotational torques of the engine 10 to drive the MG 20 as a generator. As a result, the electric power generated by the MG 20 is supplied to the high-voltage battery 30 or the second load 50.

The high-voltage battery 30 is a secondary cell capable of being charged and discharged. The high-voltage battery 30 has a function to supply the electric power to the MG 20, first load 40 and the second load 50 (i.e., power function) and a function to store the electric power generated by the MG 20 (i.e., charging function). The high-voltage battery 30 is, for example, a 48V lithium-ion cell. The high-voltage battery 30 may be connected to the low-voltage battery. The low-voltage battery is, for example, a 12V lead-acid battery. The low-voltage battery provides the electric power to the ECU 60 and a CAN (Controller Area Network) equipment.

The first load 40 is a generic term for an electric apparatus that is constantly driven by the electric power from the high-voltage battery 30. Such an electric apparatus is preselected based on aspect to drive the hybrid vehicle stably and safely, and the aspect to respond quickly to a request from a driver of the hybrid vehicle. Examples of the first load 40 include an electric stabilizer, an electric turbo and a radar. A power supply control circuit 42 is connected to the first load 40. The power supply control circuit 42 controls the power supply from the high-voltage battery 30 to the first load 40.

The second load 50 is a generic term for the electric apparatus driven by the electric power from the high-voltage battery 30 or the electric power from the MG 20. The second load 50 is also the electric apparatus in which priority driven by the electric power from the high-voltage battery 30 is lower than the first load 40. Such a electric apparatus is selected in advance based on the same aspect as the aspect used in selecting the first load 40. Examples of the second load 50 include an EH (Electrical Heater) for heating an EHC (Electrically Heated Catalyst) and an electric pump for cooling the high-voltage battery 30. An electrical heater for heating the high-voltage battery 30 is also exemplified as the second load 50. A power supply control circuit 52 is connected to the second load 50. The power supply control circuit 52 controls the power supply from the MG 20 or the high-voltage battery 30 to the second load 50.

The ECU 60 is a microcomputer including at least one memory and at least one processor. The memory stores programs and maps used for vehicle control such as the power running control mentioned above. The various functions related to the vehicle control are realized when the processor reads out to execute the programs from the memory. The ECU 60 may be composed of a plurality of ECUs.

### 1.2 Configuration of ECU

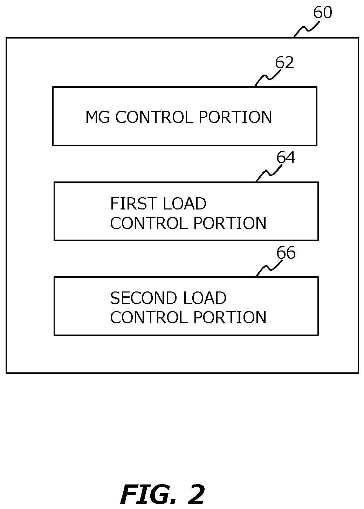

FIG. 2 is a diagram fir showing a configuration example of functions of the ECU 60. As shown in FIG. 2, the ECU 60 includes a MG control portion 62, a first load control portion 64, and a second load control portion 66.

The MG control portion 62 executes processing related to the power regeneration control and the power running control of the MG 20 executed by the MG control circuit 26. For example, the MG control portion 62 determines whether or not a signal requesting to charge the high-voltage battery 30 (hereinafter, also referred to as a "charging request signal") has been detected. The charging request signal is outputted when a SOC (Storage Of Charge) of the high-voltage battery 30 is less than a threshold THSOC. In another example, the MG control portion 62 determines whether or not a signal requesting for driving the second load 50 (hereinafter also referred to as a "second driving signal") has been detected. The second driving signal is outputted through processing of detected signals from various onboard sensor group 70.

If it is determined that charging request signal or the second driving signal has been detected, the MG control portion 62 drives the engine 10 so as to output a torque obtained by applying a surplus torque to a vehicle requesting torque. The "vehicle requesting torque" is a torque required from the hybrid vehicle to the engine 10. While the hybrid vehicle is running, the torque for continuing the running (e.g., a required torque according to an accelerator position) corresponds to the vehicle requesting torque. During the hybrid vehicle is stopped, the torque for warming up the engine 10 corresponds to the vehicle requesting torque.

If it is determined that the charging request signal has been detected, the MG control portion 62 outputs a control signal to the MG control circuit 26 such that the power generated by the MG 20 during the generation of the surplus torque is supplied to the high-voltage battery 30. If it is determined that the second driving signal has been detected, the MG control portion 62 outputs the control signal to the MG control circuit 26 such that the electric power generated by the MG 20 during the generation of the surplus torque is supplied to the second load 50.

The first load control portion 64 executes processing related to power supply control to the first load 40 executed by the power supply control circuit 42 (hereinafter also referred to as "first power supply control"). In the first power supply control, the first load control portion 64 determines whether or not a signal requesting for driving the first load 40 (hereinafter, also referred to as a "first driving signal") is detected. Similar to the second driving signal, the presence or absence of the first driving signal is outputted through the processing of the detected signals from the onboard sensor group 70. If it is determined that the first driving signal has been detected, the first load control portion 64 outputs the control signal to the power supply control circuit 42 such that electric power is supplied from the high-voltage battery 30 to the first load 40.

The second load control portion 66 executes processing related to the power supply control of the second load 50 executed by the power supply control circuit 52 (hereinafter also referred to as "second power supply control"). In the second power supply control, the second load control portion 66 determines whether not the second driving signal has been detected. That is, the second load control portion 66 executes the same processing as the judgement processing executed by the MG control portion 62. If it is determined that the second driving signal has been detected, the second load control portion 66 outputs the control signal to the power supply control circuit 52 such that the electric power generated by the MG 20 is supplied to the second load 50.

### 2. Characteristic control of first embodiment

### 2.1 Problems in second power supply control

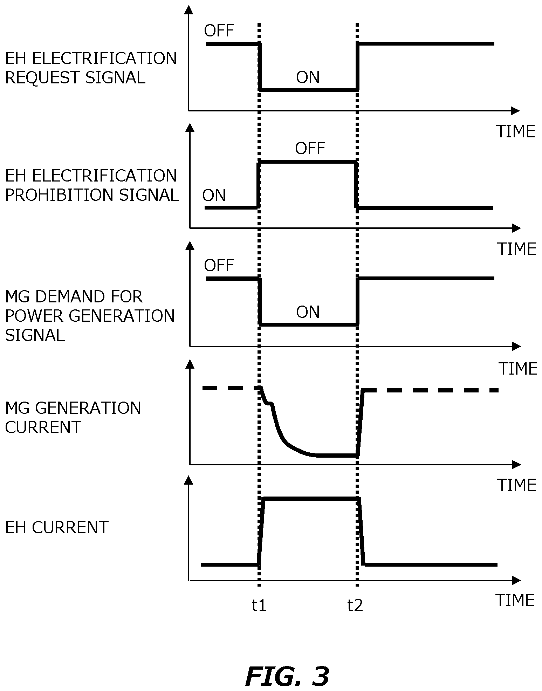

As described above, when the motor for power generation is composed of the field winding type motor, the field delay occurs before the magnetization of the field pole is completed. FIG. 3 is a timing chart for explaining the field delay and problems associated therewith. Note that in FIG. 3, it is assumed that the second load 50 is the heater EH.

In FIG. 3, a signal requesting for driving the heater EH (hereinafter also referred to as "EH electrification request signal") has been detected at the time t1. The EH electrification request signal is the second driving signal outputted when the temperature of the catalyst EHC is lower than a threshold temperature. When the EH electrification request signal has been detected, a signal for prohibiting power supply to the heater EH (hereinafter also referred to as an "EH electrification prohibition signal") is switched from ON to OFF. As a result, the prohibition of the power supply to the heater EH is released. When the EH electrification request signal has been detected, a signal for requesting the MG 20 to generate the electric power (hereinafter also referred to as a "MG demand for power generation signal") is switched from OFF to ON. As a result, the power supply from the MG 20 to the heater EH is started.

When the MG demand for power generation signal is switched from OFF to ON, the surplus torque described above is generated in the engine 10. And, the electric power generated by the MG 20 during the generation of the surplus torque is supplied to the second load 50. As a result, a current (i.e., EH current) flows through the heater EH from time t1 to t2. As a result, the temperature of the heater EH rises.

The amount of the electric power to be supplied to the heater EH for activation of the catalyst EHC may be preset. The interval from the time t1 to t2 is also able to preset based on the supplied electric power amount and values of the EH current.

In FIG. 3, the EH electrification request signal is switched from ON to OFF at the time t2. Then, the EH electrification prohibition signal is switched from OFF to ON. Further, the MG demand for power generation signal is switched from ON to OFF. As a result, the power supply from the MG 20 to the heater EH is completed.

Here, the excitation current (i.e., MG generating current) flowing in the field winding of the MG 20 is stabilized after the time t1. This is the field delay. While the field delay occurs, the electric power supplied from the MG 20 to the heater EH is insufficient. Therefore, the electric power from the high-voltage battery 30 is supplied to the heater EH in order to compensate for this shortage of the electric power. The reason why the EH current from the time t1 to t2 is constant is that the electric power from such the high-voltage battery 30 is compensated.

### 2.2 Improvements in power regeneration control of MG 20 and second power supply control

As described above, the second load 50 has the lower priority driven by the electric power from the high-voltage battery 30 than the first load 40. Therefore, for the aspect of suppressing degradation of the high-voltage battery 30, it is undesirable to compensate for the electric power of the second load 50 from the high-voltage battery 30. In the first embodiment, therefore, in order to supply the electric power generated by the MG 20 to the second load 50 only, the MG control portion 62 which executes the power regeneration control of the MG 20 and the second load control portion 66 which executes the second power supply control are configured as follows.

Specifically, if the second load control portion 66 determines that the second driving signal has been detected, it outputs the control signal to the power supply control circuit 52 so as to disconnect the electric connection between the high-voltage battery 30 and the second load 50. If the electric connection is disconnected, the power supply from the high-voltage battery 30 to the second load 50 is prohibited during the power generation by the MG 20.

Further, if it is determined that the second driving signal has been detected, the MG control portion 62 and the second load control portion 66 compare the excitation current value I with a target current value It. The excitation current value I is detected based on an actual current value signal from the field winding circuit. The target current value It is the excitation current value at which the excitation current stabilizes. The target current value It is preset.

Until the excitation current value I reaches the target current value It, the MG control portion 62 outputs the control signal to the MG control circuit 26 such that the MG 20 and the high-voltage battery 30 are connected electrically. As a result, the electric power is supplied from the MG 20 to the high-voltage battery 30 after the start of the power generation by the MG 20 and before the arrival of the excitation current value I at the target current value It.

On the other hand, until the excitation current value I reaches the target current value It, the second load control portion 66 outputs the control signal to the power supply control circuit 52 such that the electric connection between the MG 20 and the second load 50 is cut off. As a result, the electric power is never supplied from the MG 20 to the second load 50 after the start of the power generation by the MG 20 and before the arrival of the excitation current value I at the target current value It.

If the excitation current value I reaches the target current value It, the MG control portion 62 outputs the control signal to the MG control circuit 26 such that the MG 20 and the second load 50 are connected electrically. At the same time, the second load control portion 66 outputs the control signal to the power supply control circuit 52 such that the MG 20 and the second load 50 are connected electrically. As a result, the electric power is supplied from the MG 20 to the second load 50 after the excitation current value I reaches the target current value It.

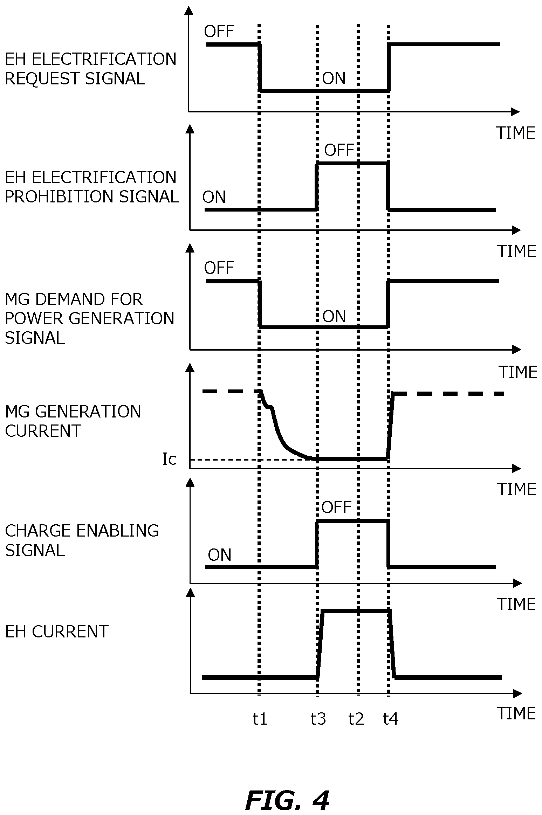

FIG. 4 is a time chart for explaining the characteristic control relating to the first embodiment. In the same manner as the example shown in FIG. 3, in the example shown in FIG. 4, it is assumed that the second load 50 is the heater EH and the EH electrification request signal has been detected at the time t1.

In FIG. 4, the MG demand for power generation signal is switched from OFF to ON at the time t1. As a result, the power generation by the MG 20, that is, the power generation for activating the catalyst EHC, is started. However, during the period from the time t1 to t3, the EH electrification prohibition signal is turned ON. On the other hand, during this period, a signal for permitting the power supply from the MG 20 to the high-voltage battery 30 (hereinafter, also referred to as a "charge enabling signal") is also turned ON. Therefore, the power supply from the MG 20 to the high-voltage battery 30 is enabled. Therefore, the electric power generated by the MG 20 is charged to the high-voltage battery 30.

The time t3 is a timing at which the excitation current value I reaches the target current value It. At this time t3, the EH electrification prohibition signal is switched from ON to OFF, and the MG demand for power generation signal is switched from OFF to ON. Further, at the time t3, the charge enabling signal is switched from ON to OFF. That is, the power supply from the MG 20 to the high-voltage battery 30 is prohibited. Therefore, the electric power generated by the MG 20 is supplied to the heater EH from the time t3 to t4. As a result, the temperature of the heater EH rises.

After the time t3, the excitation current is stabilized. That is, the excitation current value I converges to a constant value Ic. Therefore, the EH current is kept constant from the time t3 to t4. The target current value It may be preset based on the constant value Ic. The amount of the electric power to be supplied to the heater EH for activating the catalyst EHC may also be preset. Therefore, the interval from the time t3 to t4 is also able to preset based on the amount of the supplied electric power and the constant value Ic.

In FIG. 4, the EH electrification request signal is switched from ON to OFF at the time t4. Then, the EH electrification prohibition signal is switched from OFF to ON, and the MG demand for power generation signals are switched from ON to OFF. As a result, the power generation by the MG 20 is completed. Further, at the time t4, the battery charge permission is switched from OFF to ON. As a result, the prohibition of the power supply from the MG 20 to the high-voltage battery 30 is released.

### 2.3 Specific processing

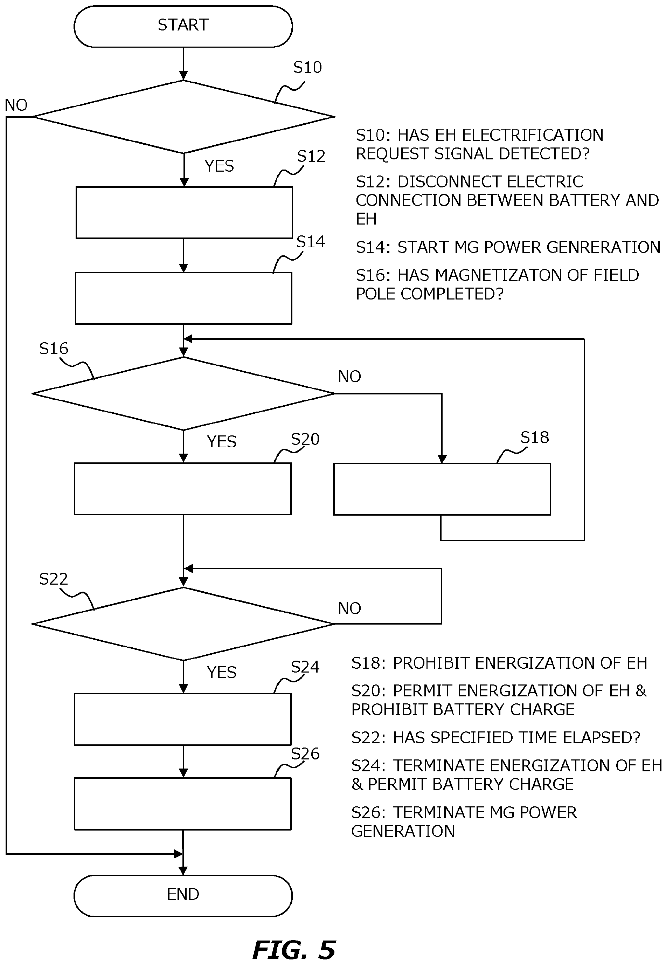

FIG. 5 is a flow chart for explaining the flow of processing of the power regeneration control of the MT 20 and the second power supply control according to the first embodiment. Note that the processing routine shown in FIG. 5 is repeatedly executed every predetermined control cycle. In FIG. 5, it is assumed that the second load 50 is the heater EH.

In the processing routine shown in FIG. 5, the ECU 60 first determines whether or not the EH electrification request signal has been detected (step S10). The EH electrification request signal is outputted when the temperature of the catalyst EHC is lower than a threshold THC. The threshold THC is preset as a temperature for determining the completion of the activation of the catalyst EHC.

If the judgement result in the step S10 is positive, the ECU 60 disconnects the electric connection between the high-voltage battery 30 and the heater EH (step S12). The ECU 60 outputs the control signal to the power supply control circuit 52 for disconnecting the electric connection.

Subsequent to the processing of the step S12, the ECU 60 makes the MG 20 to start the power generation (step S14). The ECU 60 outputs the control signal to the engine 10 for starting the power generation by the MG 20.

Subsequent to the processing of the step S14, the ECU 60 determines whether or not the magnetization of the field pole of the MG 20 has been completed (step S16). The completion of the magnetization is determined by comparing the excitation current value I to the target current value It.

If the judgement result of the step S16 is negative, the ECU 60 prohibits the supplying of the electric power from the MG 20 to the heater EH (i.e., the energization of the heater EH) (step S18). The ECU 60 outputs the control signal to the power supply control circuit 52 for disconnecting the electric connection between the MG 20 and the heater EH. Thereafter, the ECU 60 executes the processing of the step S16 again.

If the judgement result of the step S16 is positive, the ECU 60 permits the supplying of the electric power from the MG 20 to the heater EH (i.e., the energization of the heater EH) and prohibits the high-voltage battery 30 from being charged (step S20). The ECU 60 outputs the control signal for making the electrical connection between the MG 20 and the heater EH to the MG control circuit 26 and the power supply control circuit 52, respectively. The ECU 60 also outputs the control signal to the MG control circuit 26 for disconnecting the electric connection between the MG 20 and the high-voltage battery 30.

Subsequent to the processing of the step S20, the ECU 60 determines whether or not a specified time has elapsed (step S22). The specified time corresponds to the interval from the time t3 to t4 as described in FIG. 4. If the judgement result of the step S22 is negative, the ECU 60 executes the processing of the step S22 again.

If the judgement result of the step S22 is positive, the ECU 60 terminates the supplying of the electric power from the MG 20 to the heater EH (i.e., the energization of the heater EH) and permits the high-voltage battery 30 to be charged (step S24). The ECU 60 outputs the control signal for disconnecting the electric connection between the MG 20 and the heater EH to the MG control circuit 26 and the power supply control circuit 52, respectively. The ECU 60 also outputs the control signal for making the electrical connection between the MG 20 and the high-voltage battery 30 to the MG control circuit 26.

Subsequent to the processing of the step S24, the ECU 60 terminates the power generation by the MG 20 (step S26). The ECU 60 outputs the control signal for terminating the power generation by the MG 20 to the engine 10.

### 3. Advantageous effect

According to the characteristic control of the first embodiment, if the second driving signal has been detected, the electric connection between the high-voltage battery 30 and the second load 50 is disconnected. Therefore, it is possible to avoid supplying the electric power from the high-voltage battery 30 to the second load 50 during the power generation by the MG 20 for the power supply to the second load 50. Therefore, it is possible to suppress the degradation of the high-voltage battery 30 due to the compensation of the electric power from the high-voltage battery 30.

Further, according to the characteristic control of the first embodiment, after the start of the power generation by the MG 20 and before the arrival of the excitation current value I at the target current value It, it is possible to supply the electric power generated by the MG 20 to the high-voltage battery 30. Therefore, it is possible to avoid going to be wasted the electric power generated for supplying the electric power to the second load 50.

Further, according to the characteristic control of the first embodiment, it is possible to supply the electric power from the MG 20 to the second load 50 after the excitation current value I reaches the target current value It. As described above, the target current value It is set to the excitation current value at which the excitation current stabilizes. Therefore, it is possible to simplify the control of the duration of the power supply as compared with a case where the power supply from the MG 20 to the second load 50 is started prior to the arrival at the target current value It. Therefore, it is possible to improve controllability of the power regeneration control and the second power supply control of the MG 20.

### 4. Correspondence between first embodiment and aspect

In the above first embodiment, the MG 20 corresponds to the "motor for power generation" of the first aspect. The second load 50 corresponds to the "electric apparatus" of the first aspect. The high-voltage battery 30 corresponds to the "battery" of the first aspect. The ECU 60, the MG control circuit 26 and the power supply control circuit 52 correspond to the "controller" of the first aspect.

### Second embodiment

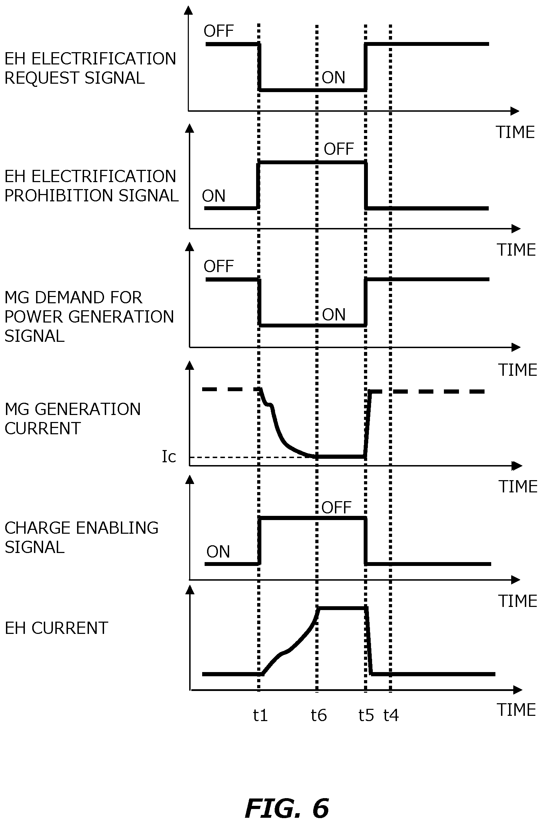

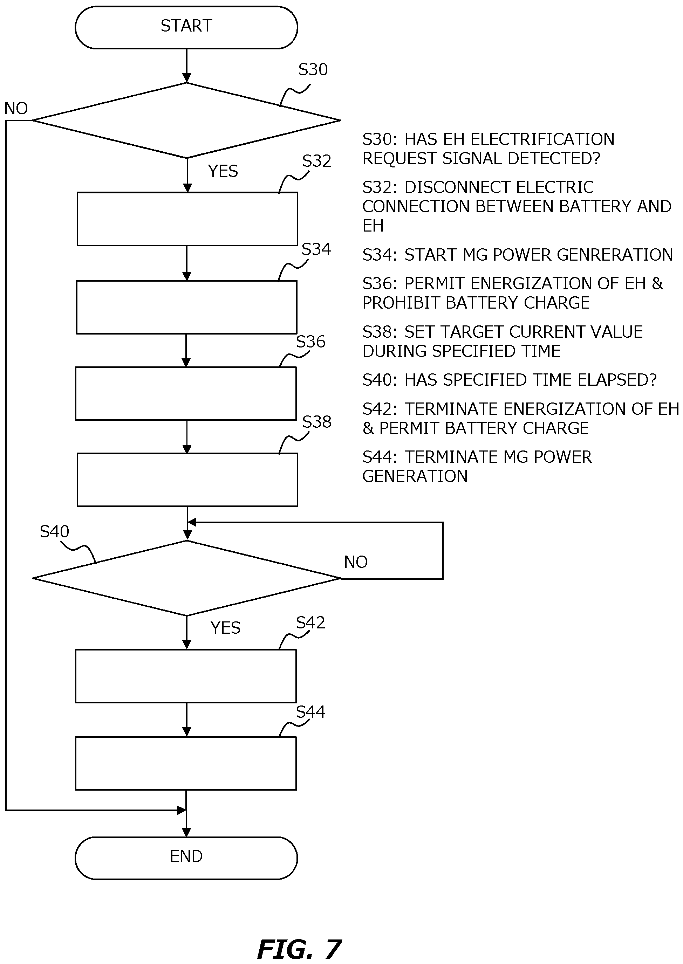

Next, a second embodiment of the present disclosure will be described with reference to FIGS. 6 and 7. The descriptions overlapping those of the first embodiment are omitted as appropriate.

### 1. Characteristic control of second embodiment

### 1.1 Problems in characteristic control of first embodiment

According to the characteristic control of the first embodiment mentioned above, after the start of the power generation by the MG 20 and before the arrival of the excitation current value I at the target current value It, the power supply from the MG 20 to the second load 50 is waited. However, since the electric power is not supplied to the second load 50 during this standby, it is difficult to respond to the second driving signal quickly.

### 1.2 Improvements in power regeneration control of MG 20 and second power supply control

Therefore, in the second embodiment, the power supply from the MG 20 to the second load 50 is started without waiting for the completion of the magnetization of the field pole. Specifically, if it is determined that the second driving signal has been detected, the MG control portion 62 and the second load control portion 66 variably set the target current value It. Hereinafter, for convenience of explanation, the variably set target current value It is referred to as a "target current value Itv".

As described above, when the excitation current value I reaches the target current value It, the MG 20 and the second load 50 are electrically connected to each other. On the other hand, prior to the completion of the magnetization of the field pole, the excitation current value I does not reach the target current value It. In this respect, the use of the target current value Itv enables the MG 20 and the second load 50 to be electrically connected even before the completion of the magnetization of the field pole.

The target current value Itv is set so as to change from zero to the constant value Ic after the second driving signal has been detected. The target current value Itv after the detection of the second driving signal and before the completion of the magnetization of the field pole may be set based on the characteristic of the excitation current value I at which the surplus torque is generated. By using this characteristic, a value lower than the excitation current value I value is able to set as the target current value Itv at all times before the completion of the magnetization of the field pole.

When the excitation current value I is represented by a negative value, a value that constantly exceeds the excitation current value I value before the completion of the magnetization of the field pole may be set as the target current value Itv. In this manner, if the value that is constantly lower than an absolute value of the excitation current value I before the completion of magnetization of the field pole is set as the absolute value of the target current value Itv, it is possible to supply the electric power from the MG 20 to the second load 50 even before the completion of the magnetization.

FIG. 6 is a time chart for explaining the characteristic control according to the second embodiment. In the same manner as the example shown in FIG. 3, in the example shown in FIG. 6, it is assumed that the second load 50 is the heater EH and the EH electrification request signal has been detected at the time t1.

In FIG. 6, the MG demand for power generation signal is switched from OFF to ON at the time t1. As a result, the power generation by the MG 20 (i.e., the power generation for activating the catalyst EHC) is started. At the time t1, the EH electrification prohibition signal is switched from ON to OFF, and the battery charge permission is switched from ON to OFF. That is, the power supply from the MG 20 to the heater EH is permitted, while the power supply from the MG 20 to the high-voltage battery 30 is prohibited.

As described above, the target current value Itv is set in the second embodiment. Therefore, the EH current flows from time t1 to t5. The time t6 is a timing at which the excitation current value I reaches the constant value Ic. As described above, the electric power to be supplied to the heater EH for activating the catalyst EHC is able to be preset. Therefore, the interval from the time t1 to t5 is able to preset based on this feed rate and the time integral of the target current value Itv.

In FIG. 6, the EH electrification request signal is switched from ON to OFF at the time t5. Then, the EH electrification prohibition signal is switched from OFF to ON, and the MG demand for power generation signal is switched from ON to OFF. As a result, the power generation by the MG 20 is completed. Further, at the time t5, the battery charge permission is switched from OFF to ON. As a result, the prohibition of the power supply from the MG 20 to the high-voltage battery 30 is released.

The time t4 shown in FIG. 6 is a timing at which the power generation by the MG 20 is completed in the characteristic control according to the above first embodiment. As can be understood from comparing the time t4 and the time t5, according to the characteristic control of the second embodiment, the power generation by the MG 20 executed for the power supply to the heater EH is completed at an earlier time.

### 1.3 Specific processing

FIG. 7 is a flow chart for explaining processing flow of the power regeneration control of the MG 20 and the second power supply control according to the second embodiment. Note that the processing routine shown in FIG. 7 is repeatedly executed every predetermined control cycle. In FIG. 7, it is assumed that the second load 50 is the heater EH.

In the processing routine shown in FIG. 7, the ECU 60 first executes the processing from the steps S30 to S34. The contents of the processing from the steps S30 to S34 are the same as those from the steps S10 to S14 shown in FIG. 5.

Subsequent to the processing of the step S34, the ECU 60 executes the processing of step S36. The content of the processing of the step S36 is the same as that in the step S20 shown in FIG. 5.

Subsequent to the processing of the step S36, the ECU 60 sets the target current value Itv during the specified time (step S38). The specified time corresponds to the interval from the time t1 to t5 as described in FIG. 6. The setting example of target current value Itv is as described above.

Subsequent to the processing of the step S38, the ECU 60 determines whether or not the specified time has elapsed (step S40). The specified time is the time set in the step S38. If the judgement result of the step S40 is negative, the processing of the step S40 is executed again.

If the judgement result of the step 40 is positive, the ECU 60 executes the processing of steps S42 and S44. The contents of the processing of the steps S42 and S44 are the same as those in the steps S24 and S26 shown in FIG. 5.

### 2. Advantageous effect

According to the characteristic control of the second embodiment, it is possible to start the power supply from the MG 20 to the second load 50 without waiting for the completion of the magnetization of the field pole. Therefore, it is possible to supply the electric power to the second load 50 generated for supplying to the second load 50 with zero waste and to respond to the second driving signal quickly.

## Claims

1. A control system (100) for hybrid vehicle, comprising:
a motor for power generation (20) which includes a field winding and is configured to generate electric power by power of an engine (10);
a battery (30) which is configured to store the electric power generated by the motor for power generation (20);
an electric apparatus (50) which is driven by the electric power generated by the motor for power generation (20) or the electric power from the battery (30); and
a controller (26, 52, 60) which is configured to control power generation of the motor for power generation (20) using the power of the engine (10), driving of the electric apparatus (50) using the electric power generated by the motor for power generation (20), and charging of the battery using the electric power generated by the motor for power generation (20),
**characterized in that** the controller (26, 52, 60) is further configured to:
when a signal requesting for the driving of the electric apparatus (50) is detected, drive the engine (10) such that the motor for power generation (20) generates power; and
interrupt electric connections between the battery (30) and the electric apparatus (50).

2. The control system (100) according to claim 1,
wherein the controller (26, 52, 60) is further configured to:
when the signal requesting for the driving of the electric apparatus (50) is detected, detect excitation current value flowing through the field winding; and
supply the electric power generated by the motor for power generation (20) without supplying to the electric apparatus (50) until the excitation current value reaches a target current value.

3. The control system (100) according to claim 2,
wherein the controller (26, 52, 60) is further configured to supply the electric power generated by the motor for power generation to the electric apparatus when the excitation current value reaches the target current value,
wherein the target current value is a current value when the excitation current flowing through the field winding converges to a constant value.

4. The control system (100) according to claim 1,
wherein the controller (26, 52, 60) is further configured to:
when a signal requesting for the driving of the electric apparatus (50) is detected, detect excitation current value flowing through the field winding;
supply the electric power generated by the motor for power generation (20) to the electric apparatus (50) when an absolute value of the excitation current value exceeds that of the target current value; and
set the target current value variably such that the absolute value of the target current value is below that of the excitation current value during the signal requesting for the driving of the electric apparatus (50) is detected.

5. The control system (100) according to any one of claims 1 to 4, further comprising:
a first load (40),
wherein the electric apparatus (50) is a second load in which priority driven by the electric power from the battery (30) is lower than the first load (40).
